# EUROPEAN PATENT APPLICATION

(11) **EP 4 043 401 A1**
(43) Date of publication of application: **17.08.2022**
(21) Application number: 20873568.8
(22) Date of filing: 09.10.2020
(51) Int. Cl.: C01G 31/00, H01M 4/58, H01M 10/052, H01M 10/054, H01M 10/0562

(54) **ELECTRODE ACTIVE MATERIAL FOR ALKALI METAL BATTERY, AND ELECTRODE AND ALKALI METAL BATTERY INCLUDING SAME**

(30) Priority: 10.10.2019 JP 2019186875
(71) Applicant: University Public Corporation Osaka, Osaka-shi, Osaka 545-0051 (JP)
(72) Inventor: SAKUDA, Atsushi, Sakai-shi, Osaka 599-8531 (JP); HAYASHI, Akitoshi, Sakai-shi, Osaka 599-8531 (JP); TATSUMISAGO, Masahiro, Sakai-shi, Osaka 599-8531 (JP)
(74) Representative: Modiano, Gabriella Diana
(86) International application number: PCT/JP2020/038342
(87) International publication number: WO 2021/070944

(57) **Abstract**

An object is to provide an electrode active material that can provide an alkali metal battery having a longer charge/discharge life and a higher capacity. The problem is solved by means of an electrode active material for an alkali metal battery, represented by formula: Aₐ₁MSₐ₂Xₐ₃ wherein A is selected from Li and Na; M is selected from V, Nb, Ta, Ti, Zr, Hf, Cr, Mo, and W which are group 4 to 6 elements; X is selected from F, Cl, Br, I, CO₃, SO₄, NO₃, BH₄, BF₄, PF₆, ClO₄, CF₃SO₃, (CF₃SO₂)₂N, (C₂F₅SO₂)₂N, (FSO₂)₂N, and [B(C₂O₄)₂]; a1 is 1 to 9; a2 is 2 to 6; when a3 is 3 and a3 is 0, a2 is not 4; and when M does not include V, a3 > 0.

## Description

### [Technical Field]

The present invention relates to an electrode active material for an alkali metal battery, and an electrode and an alkali metal battery including the same. Specifically, the present invention relates to an electrode active material capable of providing an alkali metal battery having a long charge/discharge life and a high capacity, an electrode including the same, and an alkali metal battery having a long charge/discharge life and a high capacity including the same.

### [Background Art]

In recent years, there has been an increasing demand for lithium-ion batteries for storing electric power in vehicles, such as electric vehicles and hybrid vehicles, and power generation apparatus, such as solar batteries and wind power generators.

Further, from the viewpoint of ensuring safety, all-solid-state batteries, which use a solid electrolyte layer instead of a liquid electrolyte layer, have been actively studied.

Here, a lithium-ion battery and an all-solid-state battery are comprising a positive electrode layer, an electrolyte layer, and a negative electrode layer. As a positive electrode active material included in the positive electrode (active material) of the all-solid-state battery, International Publication No. WO2016/063877 (Patent Literature 1), for example, has proposed a positive electrode active material for an all-solid-state secondary battery represented by A₂S•AX (wherein A is an alkali metal and X is selected from I, Br, Cl, F, BF₄, BH₄, SO₄, BO₃, PO₄, O, Se, N, P, As, Sb, PF₆, AsF₆, ClO₄, NO₃, CO₃, CF₃SO₃, CF₃COO, N(SO₂F)₂, and N(CF₃SO₂)₂).

Since the above positive electrode active material has low conductivity, it is required to be mixed with a solid electrolyte or a conductive auxiliary agent. The mixing improves the conductivity, while lowering the amount of the positive electrode active material in the positive electrode and therefore there was a problem that the capacity is reduced.

In order to solve the above problem, a positive electrode active material having sufficient conductivity without being mixed with a solid electrolyte or a conductive auxiliary agent has been proposed in Hayashi, Tatsumisago, et al. Annual Meeting of the Chemical Society of Japan. (2017) (Non-Patent Literature 1). Non-Patent Literature 1 reports that charging and discharging can be performed by using Li₂S-V₂S₃-S(Li₃VS₄) as a positive electrode active material without being mixed with a solid electrolyte or a conductive auxiliary agent.

### [Citation List]

### [Patent Literature]

[PL1] International Publication No. WO2016/063877

[NPL1] Hayashi, Tatsumisago, et al. Annual Meeting of the Chemical Society of Japan. (2017)

### [Summary of Invention]

### [Technical Problem]

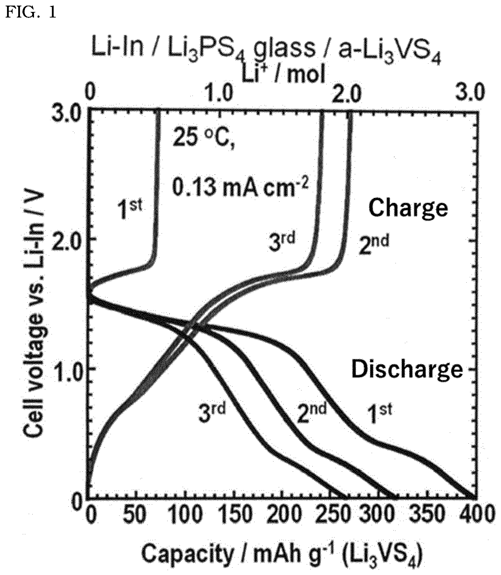

Non-Patent Literature 1 describes the charge/discharge curves shown in FIG. 1. As can be seen from FIG. 1, the capacity decreases after every cycle. Therefore, this electrode active material is still insufficient in charge/discharge life and capacity, and it has been desired to provide an electrode active material that can provide an alkali metal battery having a longer charge/discharge life and a higher capacity.

### [Solution to Problem]

Based on the concept that ionic conductivity and electronic conductivity can be further improved by adding the role of an electrolyte to the active material, the inventors of the present invention have found that an alkali metal battery with a longer charge/discharge life and a higher capacity can be provided by including a certain transition metal and a certain anion component by including in an electrode active material containing sulfur, and have arrived at the present invention.

Thus, according to the present invention, there is provided an electrode active material for an alkali metal battery, represented by the following formula: Aₐ₁MSa₂Xₐ₃
wherein A is selected from Li and Na; M is selected from V, Nb, Ta, Ti, Zr, Hf, Cr, Mo, and W which are group 4 to 6 elements; X is selected from F, Cl, Br, I, CO₃, SO₃, SO₄, NO₃, BH₄, BF₄, PF₆, ClO₄, CF₃SO₃, (CF₃SO₂)₂N, (C₂F₅SO₂)₂N, (FSO₂)₂N, and [B(C₂O₄)₂]; a1 is 1 to 9; a2 is 2 to 6; a3 is 0 to 1; when a1 is 3 and a3 is 0, a2 is not 4; and when M does not include V, a3 > 0.

Further, according to the present invention, there is provided an electrode for an alkali metal battery containing the electrode active material.

Moreover, according to the present invention, there is provided an alkali metal battery including a positive electrode, a negative electrode, and an electrolyte layer positioned between the positive electrode and the negative electrode, wherein the electrode, i.e., the positive electrode or the negative electrode or both of the positive and negative electrodes, contains the electrode active material.

### [Advantageous Effects of Invention]

The present invention can provide an electrode active material that can provide an alkaline metal battery having a longer charge/discharge life and a higher capacity.

In addition, the present invention can provide an electrode active material that can provide an alkaline metal battery having an even longer charge/discharge life and an even higher capacity when having any one of the following configurations:
(1) A is Li, M is V, and X is selected from Cl, Br, I, and SO₄;
(2) Formula: Aₐ₁MSₐ₂Xₐ₃ is represented by (Li₂S)_{b1}-(V₂S₃)_{b2}-(Li_{c}X)_{b3} (where b1/b2 is 1 to 9, b3/b2 is 0.1 to 1.5, and c is 1 to 2).
(3) A is Na, M is V, and X is selected from Cl, Br, I, and SO₄.
(4) The alkali metal battery is an all-solid-state battery.
(5) The alkali metal battery includes a positive electrode, a negative electrode, and a solid electrolyte layer positioned between the positive electrode and the negative electrode, wherein the electrodes contain no solid electrolyte.

### [Brief Description of Drawings]

[FIG. 1]
   FIG. 1 shows charge/discharge curves described in Non-Patent Literature 1.
[FIG. 2]

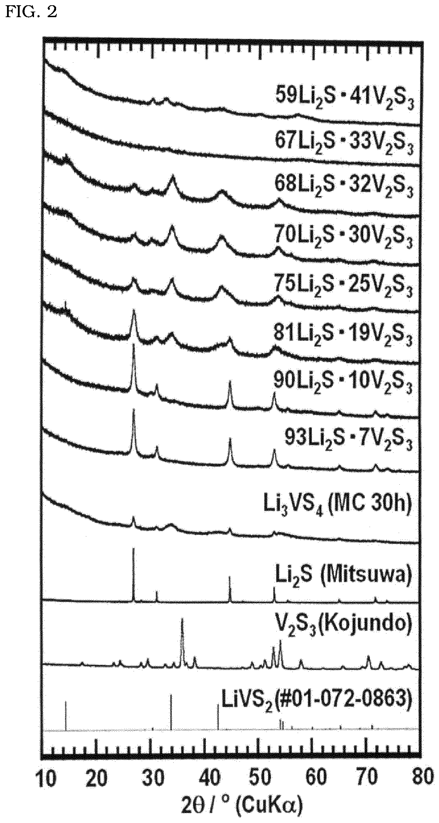

   FIG. 2 shows XRD patterns of electrode active materials of Example 1.
[FIG. 3]

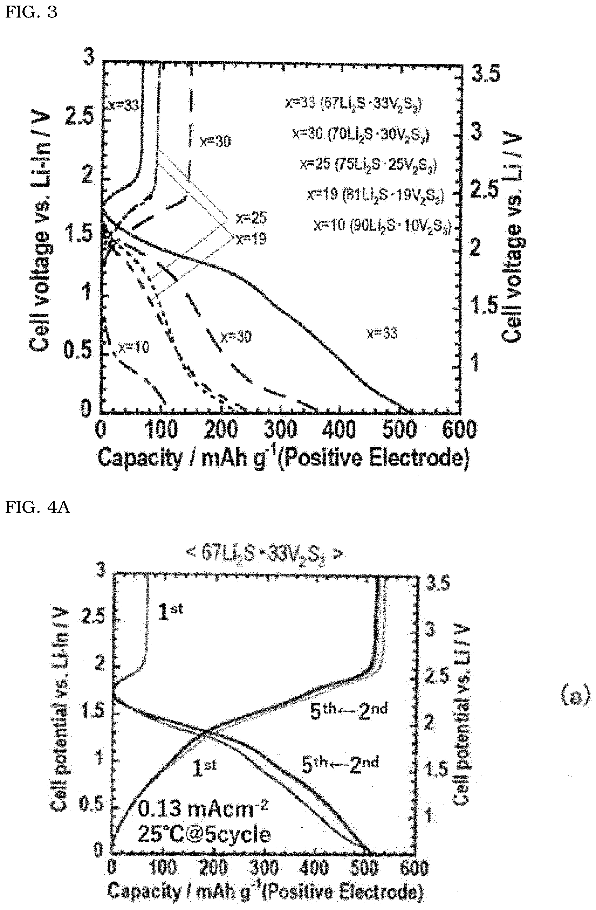

   FIG. 3 shows initial charge/discharge curves of all-solid-state batteries of Example 1.
[FIG. 4A]
   FIG. 4A shows charge/discharge curves of an all-solid-state battery using an electrode composed of an electrode active material containing Li₂S and V₂S₃ in a molar ratio of 67:33.
[FIG. 4B]

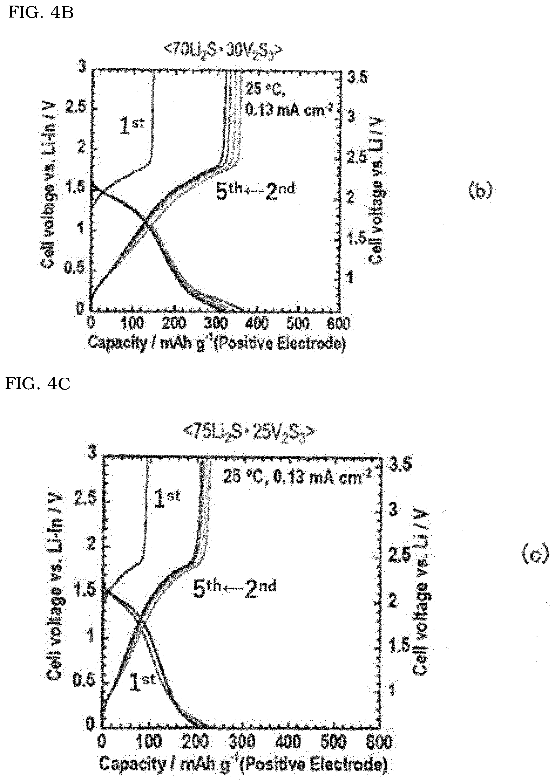

   FIG. 4B shows charge-discharge curves of an all-solid-state battery using an electrode composed of an electrode active material containing Li₂S and V₂S₃ in a molar ratio of 70:30.
[FIG. 4C]
   FIG. 4C shows charge/discharge curves of an all-solid-state battery using an electrode composed of an electrode active material containing Li₂S and V₂S₃ in a molar ratio of 75:25.
[FIG. 5A]

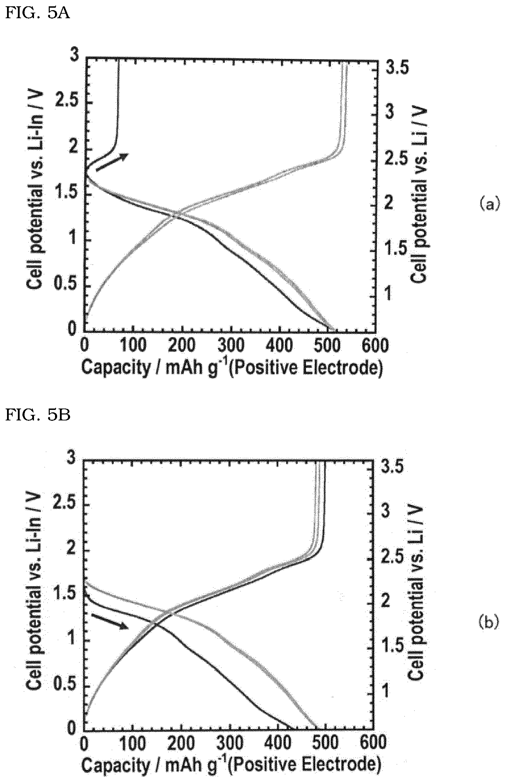

   FIG. 5A shows charge/discharge curves of the all-solid-state battery using an electrode composed of the electrode active material containing Li₂S and V₂S₃ in a molar ratio of 67:33 in the case where charging/discharging cycle was started from the charged state.
[FIG. 5B]
   FIG. 5B shows charge/discharge curves of the all-solid-state battery using an electrode composed of the electrode active material containing Li₂S and V₂S₃ in a molar ratio of 67:33 in the case where charging/discharging cycle was started from the discharged state.
[FIG. 6]

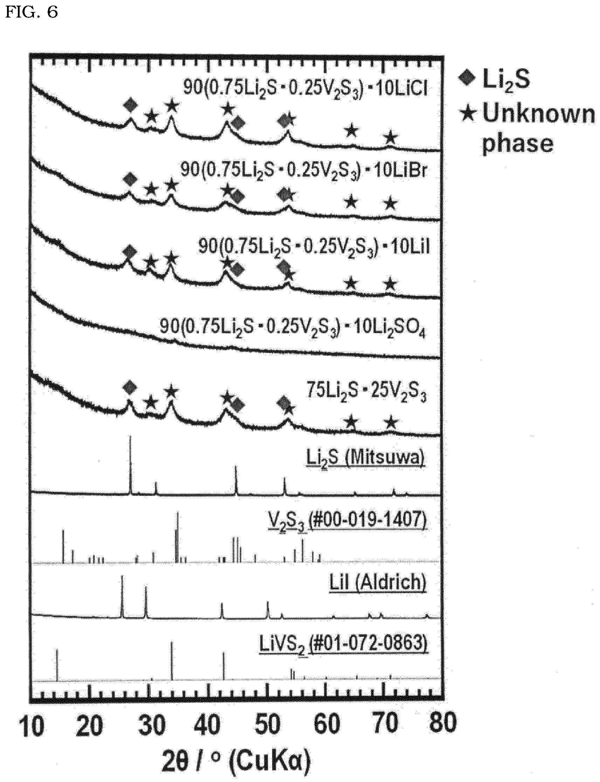

   FIG. 6 shows XRD patterns of electrode active materials of Example 2.
[FIG. 7A]

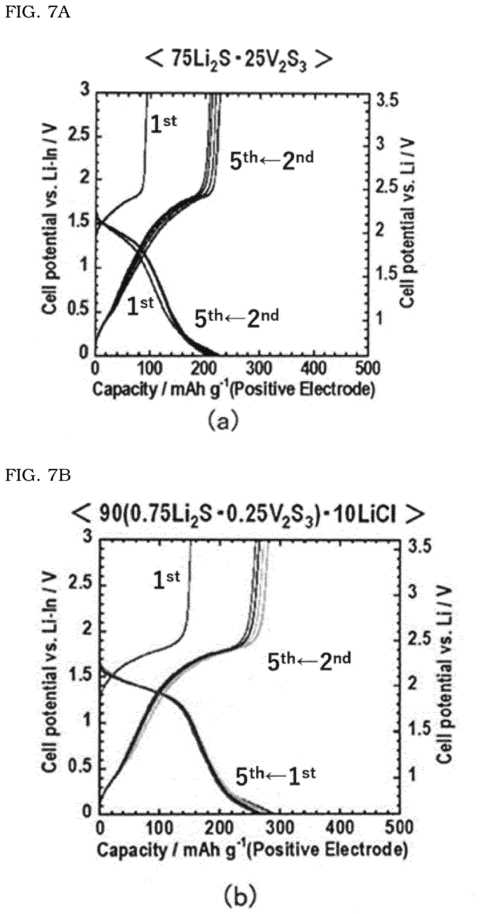

   FIG. 7A shows charge/discharge curves of an all-solid-state battery using an electrode composed of an electrode active material containing Li₂S and V₂S₃ in a molar ratio of 75:25.
[FIG. 7B]
   FIG. 7B shows charge/discharge curves of an all-solid-state battery using an electrode composed of 90(0.75Li₂S•0.25V₂S₃)•10LiCl.
[FIG. 7C]

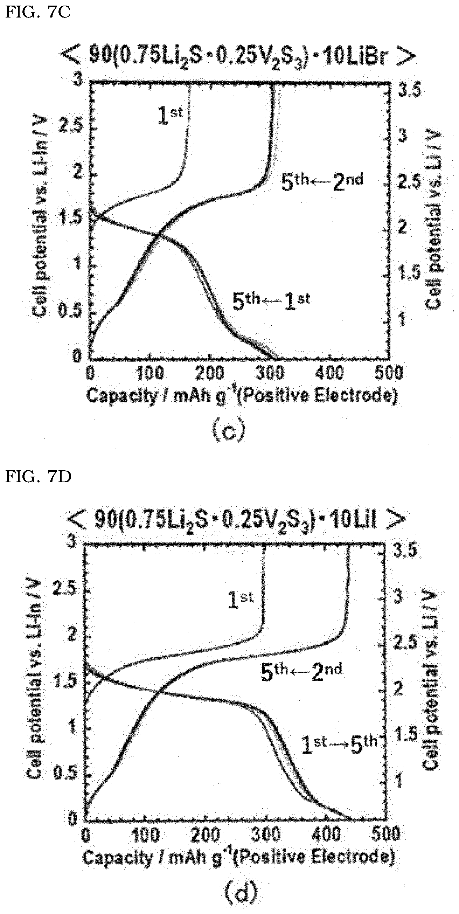

   FIG. 7C shows charge/discharge curves of an all-solid-state battery using an electrode composed of 90(0.75Li₂S•0.25V₂S₃)•10LiBr.
[FIG. 7D]
   FIG. 7D shows charge/discharge curves of an all-solid-state battery using an electrode composed of 90(0.75Li₂S•0.25V₂S₃)•10LiI.
[FIG. 7E]

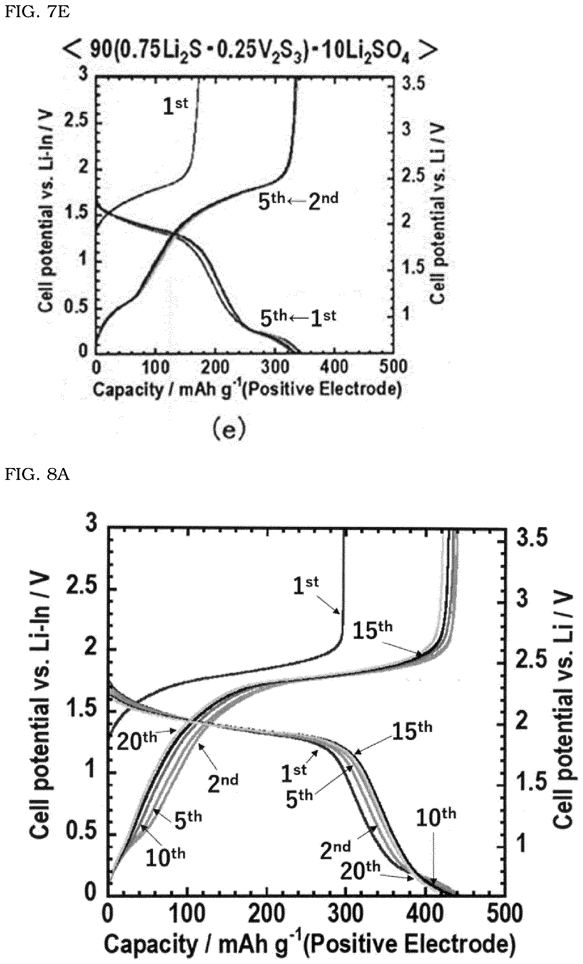

   FIG. 7E shows charge/discharge curves of an all-solid-state battery using an electrode composed of 90(0.75Li₂S•0.25V₂S₃)•10Li₂SO₄.
[FIG. 8A]
   FIG. 8A shows charge/discharge curves of an all-solid-state battery using an electrode composed of 90(0.75Li₂S•0.25V₂S₃)•10LiI.
[FIG. 8B]

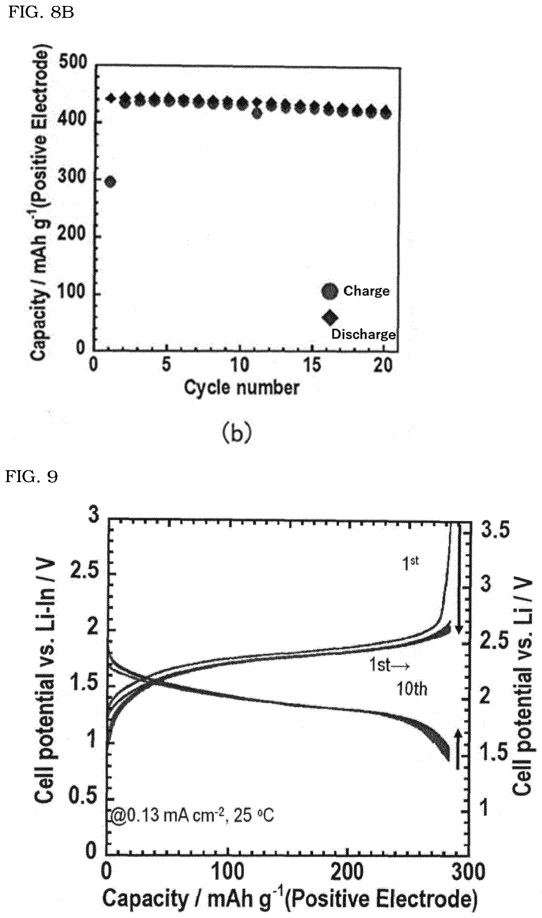

   FIG. 8B shows a change over cycles of the all-solid-state battery using the electrode composed of 90(0.75Li₂S•0.25V₂S₃)•10LiI.
[FIG. 9]
   FIG. 9 shows charge/discharge curves of an all-solid-state battery using an electrode composed of 90(0.75Li₂S•0.25V₂S₃)•10LiI when the charge/discharge capacity was limited.
[FIG. 10A]

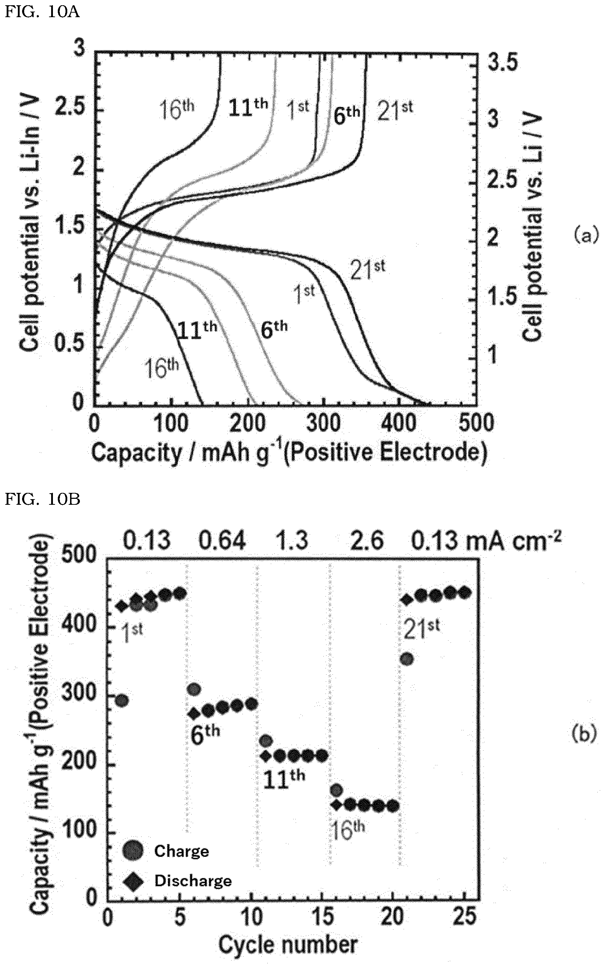

   FIG. 10A is a graph showing charge/discharge curves of an all-solid-state battery using an electrode composed of 90(0.75Li₂S•0.25V₂S₃)•10LiI in the case where charging/discharging was performed at varying current density.
[FIG. 10B]
   FIG. 10B is a graph showing a change over cycles of the all-solid-state battery using an electrode composed of 90(0.75Li₂S•0.25V₂S₃)•10LiI in the case where charging/discharging was performed at varying current densities.
[FIG. 10C]

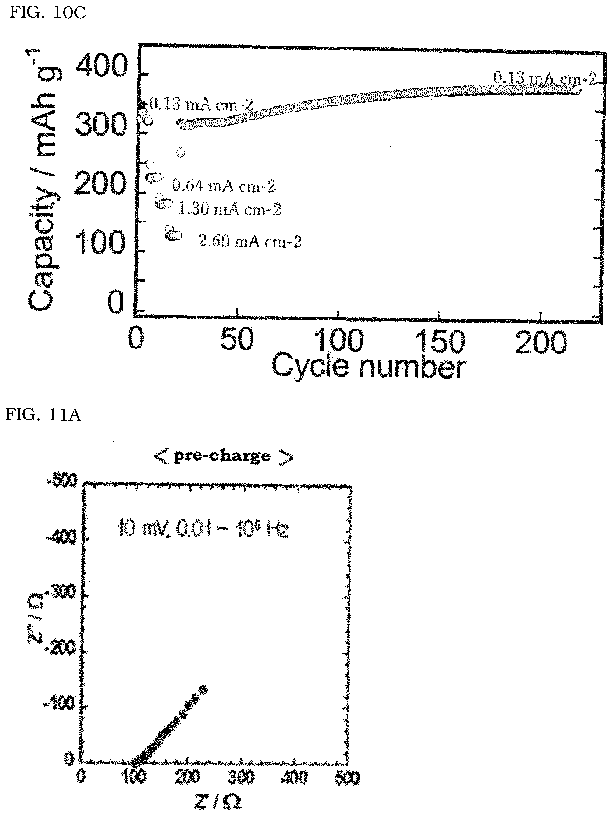

   FIG. 10C is a graph showing a change over cycles of the all-solid-state battery using an electrode composed of 90(0.75Li₂S•0.25V₂S₃)•10LiI and using 54Li₃PS₄•46LiI as a solid electrolyte in the case where charging/discharging was performed at varying current densities.
[FIG. 11A]
   FIG. 11A shows an impedance plot of the all-solid-state battery using an electrode composed of 90(0.75Li₂S•0.25V₂S₃)•10LiI.
[FIG. 11B]

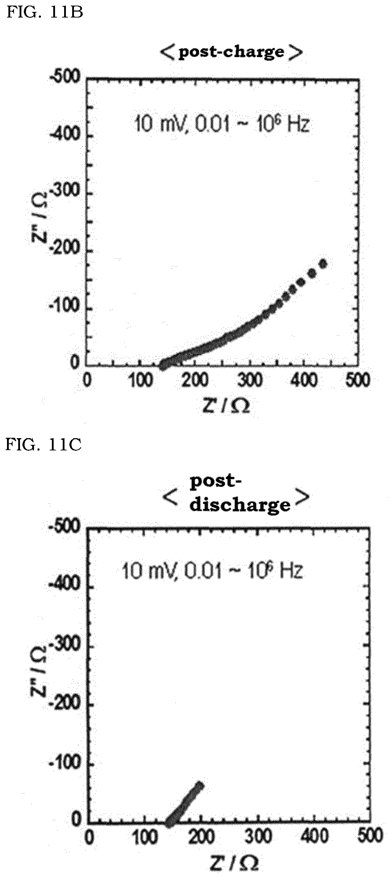

   FIG. 11B shows an impedance plot of the all-solid-state battery using an electrode composed of 90(0.75Li₂S•0.25V₂S₃)•10LiI.
[FIG. 11C]
   FIG. 11C shows an impedance plot of the all-solid-state battery using an electrode composed of 90(0.75Li₂S•0.25V₂S₃)•10LiI.
[FIG. 12A]

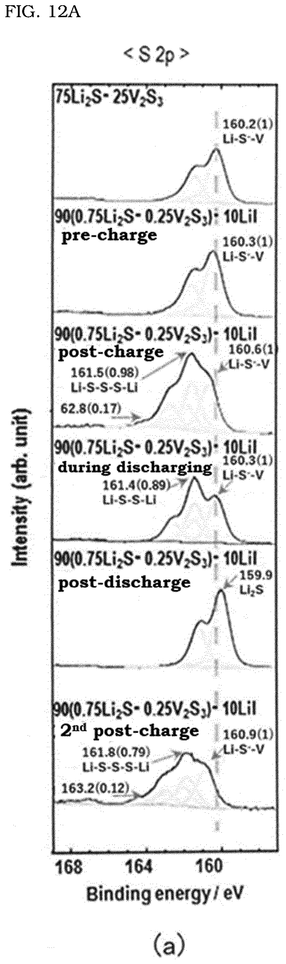

   FIG. 12A shows XPS plots of the 2p orbitals of the S atoms in electrode active materials of Example 2.
[FIG. 12B]

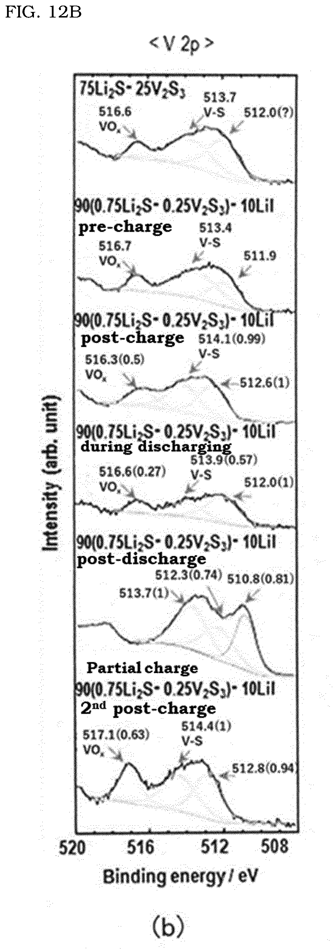

   FIG. 12B shows XPS plots of the 2p orbitals of the V atoms in the electrode active materials of Example 2.
[FIG. 13]

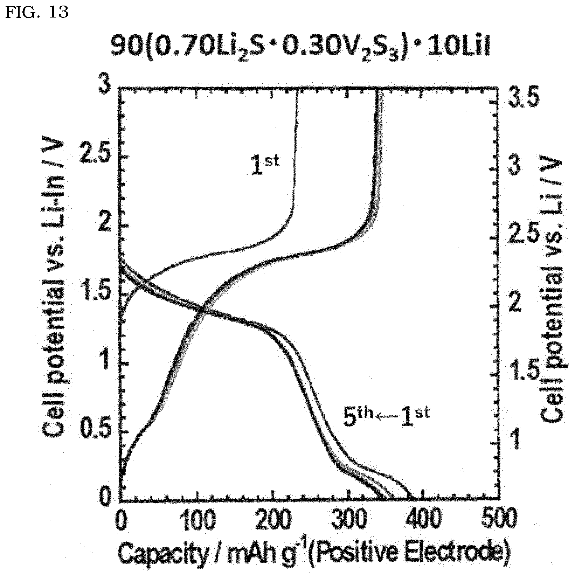

   FIG. 13 shows charge/discharge curves of an all-solid-state battery using an electrode composed of 90(0.70Li₂S·0.30V₂S₃)·10LiI.
[FIG. 14A]

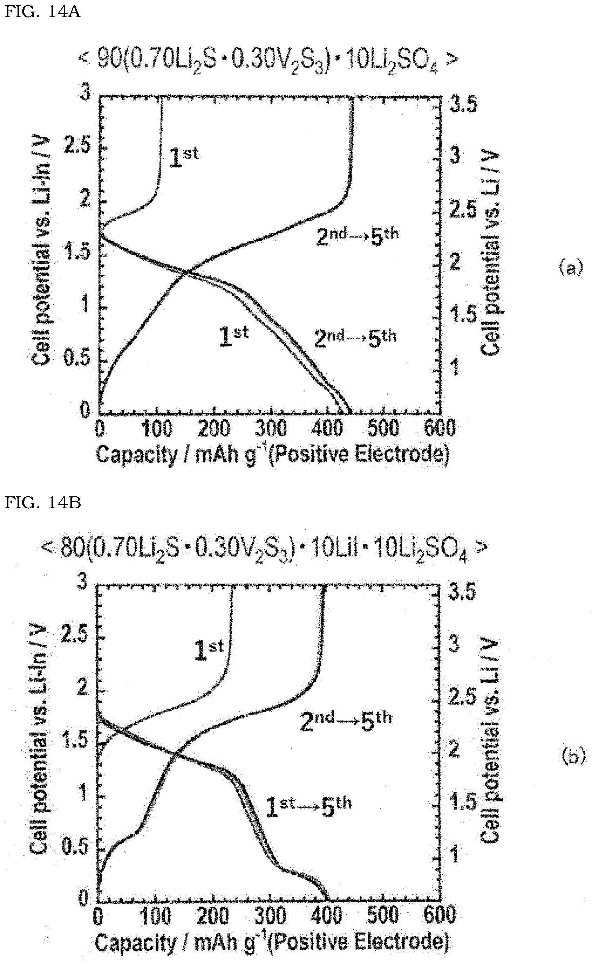

   FIG. 14A shows charge/discharge curves of an all-solid-state battery using an electrode composed of 90(0.70Li₂S•0.30V₂S₃)•10Li₂SO₄.
[FIG. 14B]
   FIG. 14B shows charge/discharge curves of an all-solid-state battery using an electrode composed of 80(0.70Li₂S•0.30V₂S₃)•10LiI•10Li₂SO₄.
[FIG. 15A]

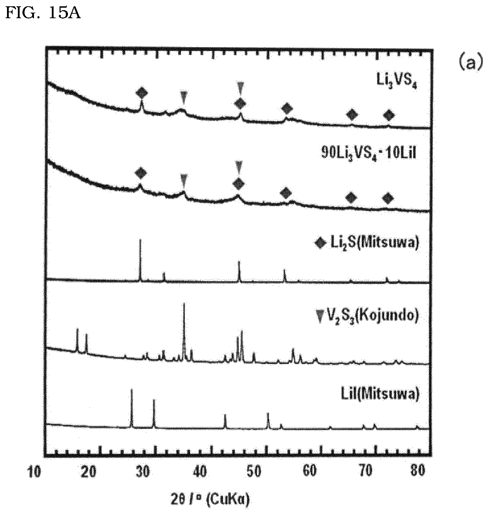

   FIG. 15A shows XRD patterns of electrode active materials of Example 5.
[FIG. 15B]

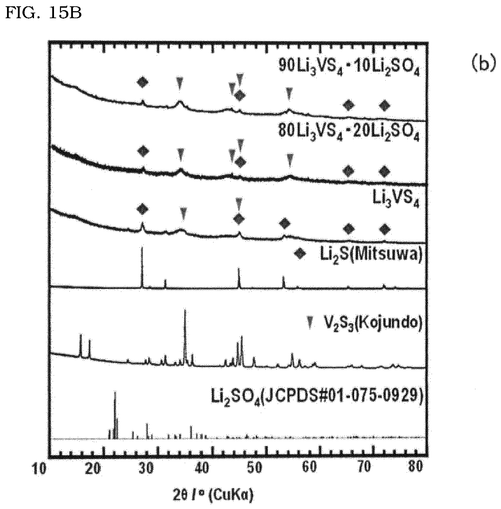

   FIG. 15B shows XRD patterns of electrode active materials of Example 5.
[FIG. 16A]

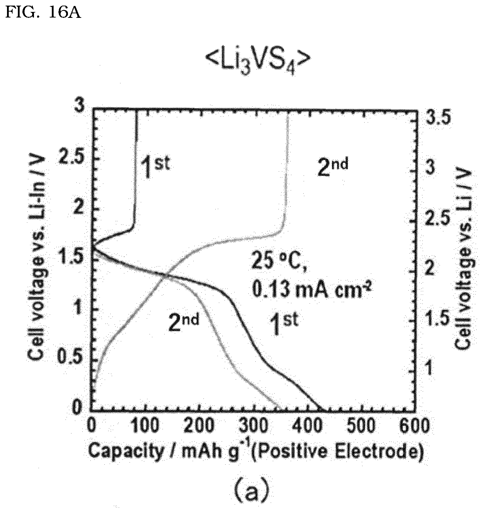

   FIG. 16A shows charge/discharge curves of an all-solid-state battery using an electrode composed of Li₃VS₄.
[FIG. 16B]

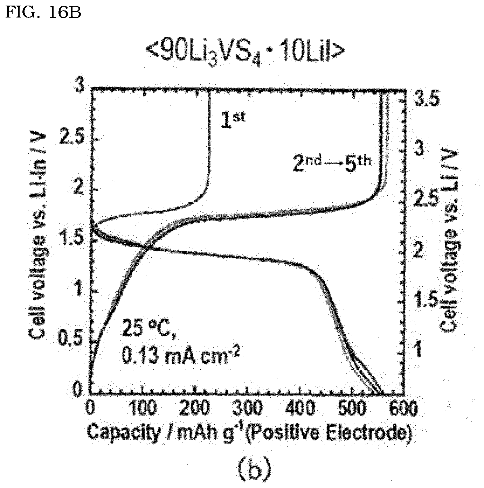

   FIG. 16B shows charge/discharge curves of an all-solid-state battery using an electrode composed of 90Li₃VS₄•10LiI.
[FIG. 16C]

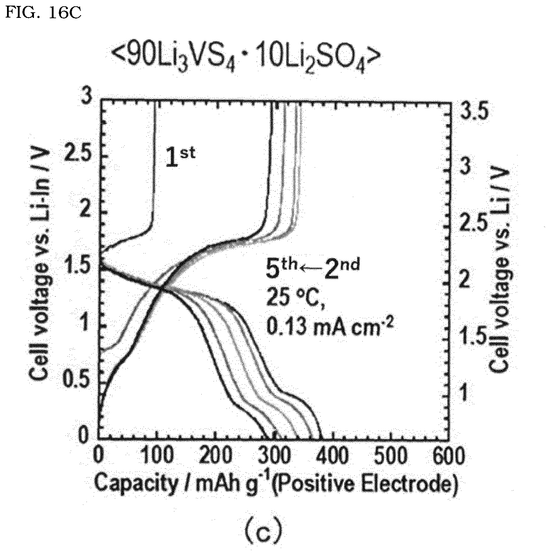

   FIG. 16C shows charge/discharge curves of an all-solid-state battery using an electrode composed of 90Li₃VS₄•10Li₂SO₄.
[FIG. 16D]

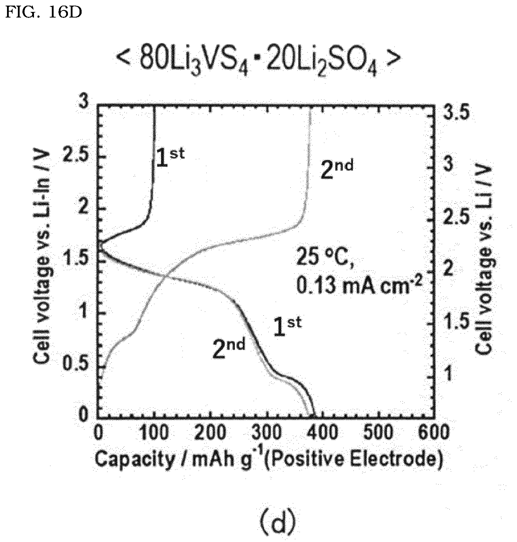

   FIG. 16D shows charge/discharge curves of an all-solid-state battery using an electrode composed of 80Li₃VS₄•20Li₂SO₄.
[FIG. 17]

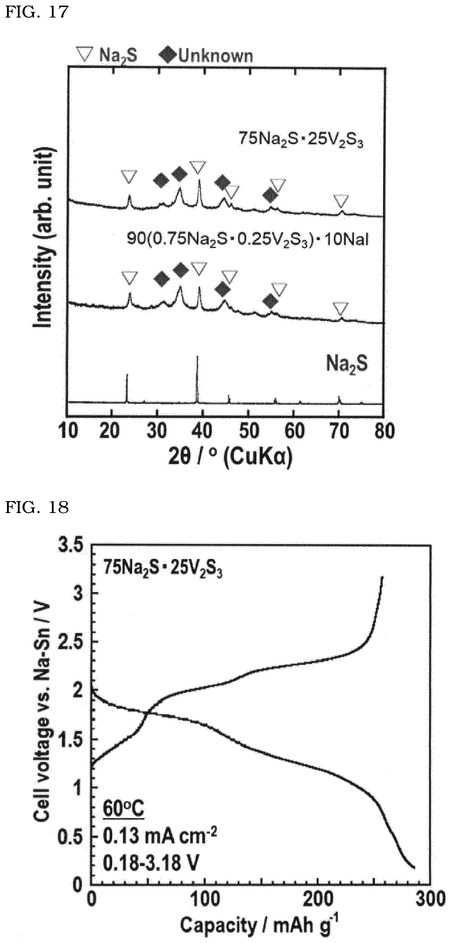

   FIG. 17 shows XRD patterns of electrode active materials of Example 6.
[FIG. 18]
   FIG. 18 shows a charge/discharge capacity of an all-solid-state battery using an electrode composed of 75Na₂S•25V₂S₃.
[FIG. 19]

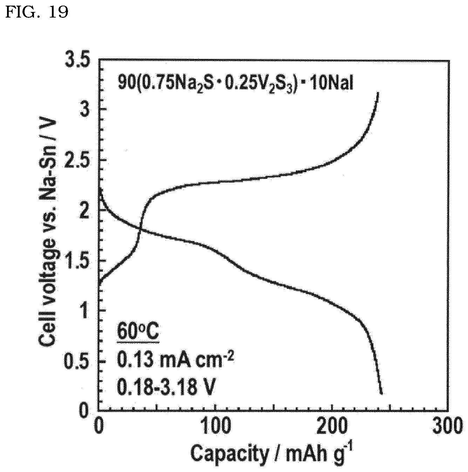

   FIG. 19 shows a charge/discharge capacity of an all-solid-state battery using an electrode composed of 90(0.75Na₂S•25V₂S₃)•10NaI.

### [Description of Embodiments]

The electrode active material of the present invention relates to an active material to be contained in an electrode of an alkali metal battery. Here, the alkali metal battery is not particularly limited as long as it is a battery in which an alkali metal such as Li or Na is exchanged between the positive electrode and the negative electrode as a mobile ion during charging and discharging. Examples of the alkali metal battery include an ion battery, such as a lithium ion battery or a sodium ion battery, in which an electrolyte layer contains a nonaqueous electrolyte solution, an all-solid-state battery, such as an all-solid-state lithium battery or an all-solid-state sodium battery, in which a solid electrolyte layer is used as an electrolyte layer. The alkali metal battery may be a primary battery or a secondary battery, but is preferably a secondary battery because the electrode active material of the present invention has an effect of extending the charge/discharge life.

### (Electrode Active Material)

The electrode active material is represented by the following formula: Aₐ₁MSa₂Xₐ₃
wherein A is selected from Li and Na. From the viewpoint of further improving the capacity, A is preferably Li.

M is selected from the group of transition metals V, Nb, Ta, Ti, Zr, Hf, Cr, Mo, and W. From the viewpoint of further improving the capacity, M preferably includes V or Nb.

X is selected from the group of anion components F, Cl, Br, I, CO₃, SO₃, SO₄, NO₃, BH₄, BF₄, PF₆, ClO₄, CF₃SO₃, (CF₃SO₂)₂N, (C₂F₅SO₂)₂N, (FSO₂)₂N, and [B(C₂O₄)₂]. From the viewpoint of further improving the capacity, X is preferably selected from Cl, Br, I, and SO₄.

a1 is 1 to 9, a2 is 2 to 6, and a3 is 0 to 1 (when a1 is 3 and a3 is 0, a2 is not 4, and when M does not include V, a3 > 0). a1, a2, and a3 are molar ratios whose ranges vary according to the valences of M and X. Further, the value of a1 varies according to charging/discharging. When a1 is less than 1, the initial charge capacity is low and the negative electrode needs to contain Li. When a1 is larger than 9, the material becomes an antifluorite Li₂S-based material, and the electronic conductivity may be lowered. When a2 is less than 2, the capacity in higher potential areas is reduced because the capacity due to sulfur redox is not available. When a2 is larger than 6, the electronic conductivity may be lowered. When a3 is larger than 1, the ionic conductivity may be improved, but the electronic conductivity and the theoretical capacity are lowered. a1 is preferably 2 to 4, a2 is preferably 3 to 5, a3 is preferably larger than 0, and more preferably 0.05 to 0.6.

a1 in the formula may be any numerical range within the range of 1 to 9, and can be, for example, a range defined by any combination of upper and lower limits selected from the values of 1.0, 1.5, 2.0, 2.5, 3.0, 3.5, 4.0, 4.5, 5.0, 5.5, 6.0, 6.5, 7.0, 7.5, 8.0, 8.5, and 9.0.

a2 in the formula may be any numerical range within the range of 2 to 6, and can be, for example, a range defined by any combination of upper and lower limits selected from the values of 2.0, 2.5, 3.0, 3.5, 4.0, 4.5, 5.0, 5.5, and 6.0.

a3 in the formula may be any numerical range within the range of 0 to 1, and can be, for example, a range defined by any combination of upper and lower limits selected from the values of 0.01, 0.025, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 0.99, and 1.0.

In one embodiment, the electrode active material may be represented by the following formula:

Aₐ₁MSa₂Xₐ₃

(wherein A is selected from Li and Na, M is selected from group 4 to 6 elements (V, Nb, Ta, Ti, Zr, Hf, Cr, Mo, and W), X is selected from F, Cl, Br, I, CO₃, SO₄, NO₃, BH₄, BF₄, PF₆, ClO₄, CF₃SO₃, (CF₃SO₂)₂N, (C₂F₅SO₂)₂N, (FSO₂)₂N, and [B(C₂O₄)₂], a1 is 1 to 9, a2 is 2 to 6, and a3 is 0<a3≤1).

In another embodiment, a3 in the above formula is 0. Namely, the electrode active material may be represented by the following formula:

Aₐ₁MSₐ₂

(wherein A is selected from Li and Na, M is selected from group 4 to 6 elements (V, Nb, Ta, Ti, Zr, Hf, Cr, Mo, and W), a1 is 1 to 9, and a2 is 2 to 6).

Among the electrode active materials represented by Aₐ₁MSₐ₂Xₐ₃, an electrode active material represented by (Li₂S)_{b1}-(V₂S₃)_{b2}-(Li_{c}X)_{b3} is more preferable. b1, b2, and b3 are molar ratios. c is 1 to 2, and is a molar ratio whose range varies according to the valence of X.

c may be any numerical range within the range of 1 to 2, and can be, for example, a range defined by any combination of upper and lower limits selected from the values of 1.0, 1.1, 1.2, 1.3, 1.4, 1.5, 1.6, 1.7, 1.8, 1.9, and 2.0.

b1/b2 is 1 to 9, and b3/b2 is preferably 0.1 to 1.5. When b1/b2 is less than 1, the material cost may increase due to an increase in vanadium content. When b1/b2 is larger than 9, the electronic conductivity may be lowered. When b1/b2 is less than 1, the initial charge capacity decreases because the lithium content decreases. When b3/b2 is less than 0.1, the effect of adding the Li_{c}X component may not be sufficiently obtained. When b3/b2 is larger than 1.5, the theoretical capacity decreases.

b1/b2 may be any numerical range within the range 1 to 9, and can be, for example, a range defined by any combination of upper and lower limits selected from the values of 1.0, 1.5, 2.0, 2.5, 3.0, 3.5, 4.0, 4.5, 5.0, 5.5, 6.0, 6.5, 7.0, 7.5, 8.0, 8.5, and 9.0.

b3/b2 may be any numerical range within the range of 0.1 to 1.5, and can be, for example, a range defined by any combination of upper and lower limits selected from the values of 0.1, 0.15, 0.2, 0.3, 0.4, 0.5, 0.6, 0.7, 0.8, 0.9, 1.0, 1.1, 1.2, 1.3, 1.4, and 1.5.

From the viewpoint of the balance among electronic conductivity, ionic conductivity, initial charge capacity, reversible capacity, and charge/discharge life, b1/b2 is preferably 1.5 to 4.5, more preferably 2 to 4, and even more preferably 2.5 to 3.5. b3/b2 is preferably 0.1 to 1.0, and more preferably 0.15 to 0.8.

For the electrode active material, when A is Li, the peak corresponding to Li₂S at around a 2θ degree of 28° in the X-ray diffraction (XRD) using CuKα rays preferably shows a full width at half maximum of 0.1° or more. The electrode active material with this half width can have a lower crystallinity.

The method for producing the electrode active material is not particularly limited as long as the raw materials can be complexed. Examples of the raw materials include mixtures of a sulfide of an alkali metal, a sulfide of a transition metal such as V, and a salt of an alkali metal with an anion component.

As the complexing method, a mechanochemical treatment is preferable from the viewpoint of being able to synthesize a nonstoichiometric compound and/or being obtain a low crystalline compound.

The mechanochemical treatment is not particularly limited with respect to the treatment apparatus and treatment conditions as long as the components can be homogeneously reacted or complexed with each other.

As the treatment apparatus, a ball mill can be usually used. Ball mills are preferable because large mechanical energy can be obtained. Among ball mills, a planetary ball mill is preferable because the pot rotates on its own axis and the base plate revolves in the opposite direction to the rotation so that high impact energy can be efficiently generated.

The treatment conditions can be appropriately set according to the treatment apparatus to be used. For example, when a ball mill is used, the higher the rotational speed and/or the longer the treatment time, the more homogeneously the raw materials can be mixed. Specifically, when a planetary ball mill is used, the conditions one, for example, a rotation speed of 50 to 600 rotations per minute, a treatment time of 0.1 to 100 hours, and 1 to 100 kWh per kg of raw materials. In order to prevent the alkali metal salt of the raw material from reacting with water or oxygen, it is preferable that the treatment is carried out within a glove box or the like in an inert atmosphere (for example, an argon atmosphere) having a moisture concentration of 1000 ppm or less and an oxygen concentration of 1000 ppm or less.

By the above-described mechanochemical treatment, an electrode active material can be obtained.

### (Electrode)

The electrode may be made of only an electrode active material, or may be a mixture of an electrode active material with a binder, a conductive material, an electrolyte, or the like.

The electrode for an alkali metal battery of the present invention contains an electrode active material. The electrode active material of the present invention has sufficiently high ionic conductivity and electronic conductivity by itself. Therefore, the amount of a solid electrolyte and/or a conductive material which is contained in the conventional electrode, can be reduced, or the use of such a solid electrolyte and/or a conductive material may be eliminated. As a result, the percentage of the electrode active material in the electrode can be increased; therefore, an alkali metal battery having a higher capacity can be provided. The percentage of the electrode active material in the electrode is not particularly limited, but it is preferable that the electrode contains the electrode active material as a main component. Here, containing as a main component means that the percentage of the electrode active material in the electrode is 50 mass% or more of the total components constituting the electrode. The percentage of the electrode active material in the electrode is preferably 60 mass% or more, more preferably 70 mass% or more, more preferably 80 mass% or more, more preferably 90 mass% or more, more preferably 95 mass% or more, more preferably 97 mass% or more, more preferably 98 mass% or more, more preferably 99 mass% or more, and most preferably 100 mass%. However, the use of a solid electrolyte and/or a conductive material is not excluded, and these may be used as necessary.

Examples of the binder include polyvinylidene fluoride, polytetrafluoroethylene, polyvinyl alcohol, polyvinyl acetate, polymethyl methacrylate, polyethylene, and the like.

The binder can be contained in an amount of 40 parts by mass or less per 100 parts by weight of the electrode active material in the electrode, and is preferably 30 parts by weight or less, more preferably 20 parts by weight or less, more preferably 10 parts by weight or less, more preferably 5 parts by weight or less, more preferably 3 parts by weight or less, and more preferably 1 part by weight or less.

Examples of the conductive material include natural graphite, artificial graphite, acetylene black, Ketchen black, Denka black, carbon black, vapor-grown carbon fiber (VGCF), and the like.

The conductive material can be contained in an amount of 40 parts by weight or less per 100 parts by weight of the electrode active material in the electrode, and is preferably 30 parts by weight or less, more preferably 20 parts by weight or less, more preferably 10 parts by weight or less, more preferably 5 parts by weight or less, more preferably 3 parts by weight or less, and more preferably 1 part by weight or less.

Examples of the solid electrolyte include the electrolyte used in the solid electrolyte layer described below in the section of alkali metal battery.

In addition to the electrode active material of the present invention, another electrode active material may be added as necessary. When the electrode active material of the present invention is used as a positive electrode active material, examples of the another electrode active material include A₄Ti₅O₁₂, ACoO₂, AMnO₂, AVO₂, ACrO₂, ANiO₂, A₂NiMn₃O₈, ANi_{1/3}Co_{1/3}Mni_{1/3}O₂, S, A₂S, FeS, TiS₂, AFeO₂, A₃V₂(PO₄)₃, AMn₂O₄, and the like (A is Li or Na). The electrode active material may be coated with a material such as LiNbO₃, NaNbO₃, Al₂O₃, or NiS. The coating may have ever or uneven thickness, but has preferably even thickness. When the electrode active material of the present invention is used as a negative electrode active material, examples of the another electrode active material include metals such as Li, Na, In, Sn, and Sb, Na alloys, graphite, hard carbon, various transition metal oxides such as Li_{4/3}Ti_{5/3}O₄, Li₃V₂(PO₄)₃, Na_{4/3}Ti_{5/3}O₄, Na₃V₂(PO₄)₃, and SnO, and the like.

The another electrode active material can be contained in an amount of 40 parts by weight or less per 100 parts by weight of the electrode active material in the electrode, and is preferably 30 parts by weight or less, more preferably 20 parts by weight or less, more preferably 10 parts by weight or less, more preferably 5 parts by weight or less, more preferably 3 parts by weight or less, and more preferably 1 part by weight or less.

The electrode can be obtained in the form of a pellet by, for example, pressing an electrode active material, optionally mixed with a binder, a conductive material, an electrolyte or the like.

### (Alkali Metal Battery)

The electrode used for the alkali metal battery is the electrode of the present invention described above. The electrode of the present invention can be used as a positive electrode, a negative electrode, or positive and negative electrodes (however, the compositions thereof are different from each other).

When the electrode of the present invention is used as a positive electrode, the negative electrode is not particularly limited as long as an alkali metal such as Li or Na can be exchanged as a mobile ion between the positive electrode and the negative electrode during charging/discharging, and the positive electrode may be used in combination with a negative electrode other than the negative electrode of the present invention. When the electrode of the present invention is used as a negative electrode, the positive electrode is not particularly limited as long as an alkali metal such as Li or Na can be exchanged as a mobile ion between the positive electrode and the negative electrode during charging/discharging, and the negative electrode may be used in combination with a positive electrode other than the positive electrode of the present invention.

Examples of the positive electrode active material used for the positive electrode other than the positive electrode of the present invention include A₄Ti₅O₁₂, ACoO₂, AMnO₂, AVO₂, ACrO₂, ANiO₂, A₂NiMn₃O₈, ANi_{1/3}Co_{1/3}Mni_{/3}O₂, S, A₂S, FeS, TiS₂, AFeO₂, A₃V₂(PO₄)₃, AMn₂O4, and the like (A is Li or Na). The positive electrode active material may be coated with a material such as LiNbO₃, NaNbO₃, Al₂O₃, or NiS. The coating may have even or uneven thickness but has preferably even thickness.

Examples of the negative electrode active material used for the negative electrode other than the negative electrode of the present invention include metals such as Li, Na, In, Sn, and Sb, Na alloys, graphite, hard carbon, various transition metal oxides such as Li_{4/3}Ti_{5/3}O₄, Li₃V₂(PO₄)₃, Na_{4/3}Ti_{5/3}O₄, Na₃V₂(PO₄)₃, and SnO, and the like.

The positive electrode and the negative electrode may be made of only an electrode active material, or may be a mixture of an electrode active material with a binder, a conductive material, an electrolyte, or the like. These negative electrode active materials or positive electrode active materials may be used alone or in combination of two or more.

As the binder, the conductive material, and the electrolyte, any of those listed above in the section of electrode can be used.

The electrode can be obtained in the form of a pellet by, for example, pressing an electrode active material, optionally mixed with a binder, a conductive material, an electrolyte or the like. When a metal sheet (foil) made of a metal or an alloy thereof is used as the negative electrode active material, it can be used as it is.

The positive and/or negative electrode may be further combined with a current collector to form a composite.

The material, shape, and the like of the current collector are not particularly limited as long as it can be combined with the positive electrode and/or the negative electrode and can function as a current collector. The shape of the current collector may be like an even alloy plate or a shape having a hole. The current collector may also be in the form of a foil, a sheet, or a film.

Examples of the material of the current collector include Ni, Cu, Ti, Fe, Co, Ge, Cr, Mo, W, Ru, Pd, Al, stainless steel, steel, and the like. These materials may be used alone or in combination of two or more.

The kind of material constituting the electrolyte layer used for an alkaline metal battery varies depending on whether the layer contains a nonaqueous electrolyte solution or is all solid, in other words, depending on whether the layer is a nonaqueous electrolyte layer or an all-solid electrolyte layer.

### (1) Nonaqueous Electrolyte Layer

The electrolyte layer can be composed of a mixture of a known electrolyte and a nonaqueous solvent.

Examples of the electrolyte include AClO₄, APF₆, ABF₄, ACF₃SO₃, AAsF₆, AB(C₆H₅)₄, ACl, ABr, CH₃SO₃A, CF₃SO₃A, AN(SO₂CF₃)₂, AN(SO₂C₂F₅)₂, AC(SO₂CF₃)₃, AN(SO₃CF₃)₂, and the like (A is Li or Na).

The nonaqueous solvent is not particularly limited, and examples thereof include carbonates, ethers, ketones, sulfolane compounds, lactones, nitriles, chlorinated hydrocarbons, ethers, amines, esters, amides, phosphoric acid ester compounds, and the like. Typical examples of these are 1,2-dimethoxyethane, 1,2-diethoxyethane, tetrahydrofuran, 2-methyltetrahydrofuran, ethylene carbonate, vinylene carbonate, methylformate, dimethylsulfoxide, propylene carbonate, acetonitrile, γ-butyrolactone, dimethylformamide, dimethyl carbonate, diethyl carbonate, sulfolane, ethylmethyl carbonate, 1,4-dioxane, 4-methyl-2-pentanone, 1,3-dioxolane, 4-methyl-1,3-dioxolane, diethyl ether, sulfolane, methyl sulfolane, propionitrile, benzonitrile, butyronitrile, valeronitrile, 1,2-dichloroethane, trimethyl phosphate, triethyl phosphate, and the like. These can be used alone or in combination of two or more.

### (2) Solid Electrolyte Layer

The solid electrolyte constituting the solid electrolyte layer is not particularly limited, and any solid electrolyte normally used in all-solid-state batteries can be used. Examples of the solid electrolyte include a solid electrolyte represented by A₂S•NₓS_{y} (A is Li or Na, N is selected from P, Si, Ge, B, Al, and Ga, and x and y are integers that give a stoichiometric ratio according to the kind of M). Specific examples of NₓS_{y} include P₂S₅, SiS₂, GeS₂, B₂S₃, Al₂S₃, Ga₂S₃, and the like. These specific NₓS_{y} may be used alone or in combination of two or more. Among these, P₂S₅ is particularly preferred.

Further, the molar ratio of A₂S to NₓS_{y} is preferably 50:50 to 90:10, more preferably 67:33 to 80:20, and even more preferably 70:30 to 80:20.

The solid electrolyte may contain, in addition to A₂S•NₓS_{y}, other solid electrolytes such as various lithium salts including lithium halide Li₃PO₄ and the like, sodium salts including sodium halide, Na₃PO₄ and the like.

The solid electrolyte may be in a glass state, a glass ceramic state, or crystalline. The glass state means a substantially noncrystalline state. Here, the substantially noncrystalline state includes, the 100% noncrystalline state as well as a state where crystalline solid electrolyte is finely dispersed in noncrystalline solid electrolyte. The glass ceramic state means a state generated as a result of heating a solid electrolyte in the glass state to a temperature equal to or higher than the glass transition point.

The solid electrolyte in the glass ceramic state may be in a state in which a crystalline phase is dispersed in a glass amorphous phase. The percentage of the crystalline phase in the whole glass ceramics may be 50 mass% or more, 60 mass% or more, 70 mass% or more, or 80 mass% or more. The percentage of the crystalline phase can be determined by transmission electron microscopy, crystal structure analysis by the Rietveld method, or the like.

Furthermore, the solid electrolyte in the glass ceramic state may have no glass transition point that was present in the corresponding solid electrolyte in the glass state.

The solid electrolyte can be formed into a solid electrolyte layer, for example, by being pressed so as to have a predetermined thickness. The pressure of the press may be selected from the pressures in a range of 50 to 2000 MPa.

The solid electrolyte may be composed of one kind or a mixture of a plurality of kinds.

The percentage of A₂S•NₓS_{y} in the solid electrolyte layer is preferably 80 mass% or more, preferably 85 mass% or more, more preferably 90 mass% or more, more preferably 95 mass% or more, more preferably 97 mass% or more, and more preferably 99 mass% or more. The thickness of the solid electrolyte layer is not particularly limited, but is preferably 5 to 1000 µm, more preferably 5 to 500 µm, more preferably 5 to 200 µm, more preferably 5 to 100 µm, more preferably 10 to 100 µm, and more preferably 10 to 50 µm. The solid electrolyte layer can be obtained, for example, by pressing solid electrolyte powder.

### (3) Method for Manufacturing Alkali Metal Battery

The present invention also provides a method for manufacturing an alkali metal battery using the electrode active material of the present invention.

### (3-1) Ion Battery

When a nonaqueous electrolyte layer is used, an ion battery can be obtained by introducing into a battery can, a positive electrode and a negative electrode, and pouring a mixture of an electrolyte and a nonaqueous solvent.

A separator may be used between the positive electrode and the negative electrode. In this case, it is preferable to use a microporous polymer film. Specifically, a separator made of a polyolefin polymer, such as nylon, cellulose acetate, nitrocellulose, polysulfone, polyacrylonitrile, polyvinylidene fluoride, polypropylene, polyethylene, or polybutene, can be used. Positive electrodes, separators, and negative electrodes may be stacked.

### (3-2) All-Solid-State Battery

An all-solid-state battery can be obtained, for example, by stacking and pressing a positive electrode, a solid electrolyte layer, and a negative electrode to obtain a cell and fixing the cell to a container.

### [Examples]

Hereinafter, the present invention will be described in more detail by way of Examples and Comparative Examples, but the present invention is not limited thereto. In the following Examples and Comparative Examples, Li₂S manufactured by Mitsuwa Chemicals Co., Ltd. (purity>99.9%), V₂S₃ manufactured by Kojundo Chemical Lab. Co., Ltd. (purity>99.9%), and LiCl, LiBr, LiI, and Li₂SO₄ manufactured by Aldrich (purity>99.999%) were used.

In the following Examples and Comparative Examples, ionic conductivity and electronic conductivity were measured using a potentiogalvanostat Solartron 1287A and an impedance analyzer 1260A manufactured by Solartron Analytical. Structural analyses were performed with CuKα rays in the range of 2θ = 10° to 90° using, as an X-ray diffractometer, a fully automatic multi-purpose X-ray diffractometer SmartLab manufactured by Rigaku Corporation. XPS measurements were performed with a K-Alpha X-ray photoelectron spectroscopy (XPS) system manufactured by Thermo Fisher Scientific using monochromatic Al-Kα (1486.6 eV) X-rays. The measurement area was about 400 µm², an Ar⁺ neutralizing gun was used for charge neutralization, and Ar ion was used for etching. Charge was corrected with reference to the surface contaminants (hydrocarbon, CHS, 284.7 ev) of the sample.

### Example 1

Li₂S and V₂S₃ were weighed to have molar ratios of 93:7, 90:10, 81:19, 75:25, 70:30, 68:32, 67:33, and 59:41, and put into a planetary ball mill. After mechanochemical treatment using the planetary ball mill, eight kinds of electrode active materials were obtained.

As the planetary ball mill, Pulverisette P-7 manufactured by Fritsch was used, in which a 45 ml pot contains 500 balls (about 90g) having a diameter of 4 mm, and the pot and the balls are made of ZrO₂. The mechanochemical treatment was performed for 80 hours in a dry argon glove box at room temperature at a rotational speed of 510 rpm with a feed amount of 0.3 to 0.5g. FIG. 2 shows powder XRD patterns of the eight kinds of electrode active materials. XRD patterns of Li₂S, V₂S₃, and LiVS₂ are also shown in the lower part of FIG. 2. The electronic conductivity was measured for the electrodes containing Li₂S and V₂S₃ in molar ratios of 81:19, 75:25, 70:30, 68:32, 67:33, and 59:41, and all of them exhibited a high conductivity of 10⁻¹ S cm⁻¹ or more, which is above the upper measurement limit of the instrument. On the other hand, the electrode with a high Li₂S content in a molar ratio of 90:10 exhibited a relatively low electronic conductivity of 4.6×10⁻⁷ S cm⁻¹. The electronic conductivity of the one with the ratio of 93:7 was 10⁻⁷ S cm⁻¹ or less. From this fact, it can be seen that even the one with the ratio of 90:10 is improved in the electronic conductivity as a result of complexing with V₂S₃. The sample for electronic conductivity measurement was a powder mold obtained by subjecting 80 mg of the obtained electrode active material powder to uniaxial press molding at room temperature (25°C) and 360 MPa.

An all-solid-state battery was manufactured using each of the above-described electrodes as the positive electrode, and the initial charge/discharge curve of the battery was measured. The measurement conditions were that the obtained secondary battery (cell) was charged and discharged for one cycle at a current density of 0.13 mA/cm² at 25°C. The results are shown in FIG. 3. In FIG. 3, the vertical axis on the left side shows the voltage with respect to the Li-In counter electrode. The initial charge capacity and initial discharge capacity are shown in Table 1.

**[Table 1]**

| Li₂S:V₂S₃ (molar ratio) | Initial charge capacity (mAh g⁻¹) | Initial discharge capacity (mAh g⁻¹) |
|---|---|---|
| 67:33 | 66 | 522 |
| 70:30 | 146 | 374 |
| 75:25 | 94 | 230 |
| 81:19 | 93 | 249 |
| 90:10 | 1 | 115 |

Each all-solid-state battery was manufactured as follows.

By pressing (at a pressure of 360 MPa) 3 mg of the obtained electrode active material and 80 mg of a solid electrolyte (hereinafter referred to as SE) composed of Li₂S•P₂S₅ (in a molar ratio of Li₂S and P₂S₅ of 75:25), a double-layer pellet of a positive electrode layer and an SE layer having a diameter of 10 mm and a thickness of about 0.7 mm, was obtained. No SE is mixed in the positive electrode layer. The SE used was synthesized by the following method.

One gram of Li₂S (purity: 99.9% or more; manufactured by Idemitsu Kosan Co., Ltd.) and P₂S₅ (purity: 99%; manufactured by Aldrich) was weighed at a molar ratio of 75:25 and put into a planetary ball mill. After mechanochemical treatment, the SE was obtained. As the planetary ball mill, Pulverisette P-7 manufactured by Fritsch was used, in which a 45 ml pot contains 500 balls having a diameter of 4 mm, and the pot and the balls are made of zirconium oxide. The dry mechanochemical treatment was performed for 10 hours in a dry nitrogen glove box at room temperature at a rotational speed of 510 rpm. This synthesis method was performed in accordance with the description of Experimental in Akitoshi Hayashi et al., Journal of Non-Crystalline Solids 356 (2010) 2670-2673.

An all-solid-state battery was obtained by stacking, as the negative electrode, a Li-In alloy on the above-described stack of the positive electrode layer and the electrolyte layer, sandwiching the stack with stainless steel current collectors, and pressing again (at a pressure of 120 MPa).

FIGS. 4A to 4C show measurement results of charge/discharge curves up to five cycles for three kinds of electrodes containing Li₂S and V₂S₃ in molar ratios of 67:33, 70:30, and 75:25. The charge capacities and discharge capacities at the first to fifth cycles are shown in Table 2. The measurement conditions were that the obtained secondary battery (cell) was charged and discharged at a current density of 0.13 mA/cm² at 25°C.

**[Table 2]**

| Li₂S:V₂S₃ (molar ratio) | | Capacity (mAh g⁻¹) | | | | |
|---|---|---|---|---|---|---|
| | | First | Second | Third | Fourth | Fifth |
| 67:33 | Charge | 66 | 535 | 526 | 522 | 519 |
| | Discharge | 522 | 521 | 522 | 520 | 517 |
| 70:30 | Charge | 146 | 357 | 344 | 331 | 320 |
| | Discharge | 374 | 351 | 378 | 326 | 316 |
| 75:25 | Charge | 94 | 227 | 220 | 213 | 208 |
| | Discharge | 230 | 223 | 217 | 211 | 206 |

From FIGS. 4A to 4C and Table 2, it can be seen that the charge/discharge curves hardly change over cycles, and the batteries are resistant to repeated charging/discharging.

For the all-solid-state battery using the electrode containing Li₂S and V₂S₃ in a molar ratio of 67:33, it was confirmed whether the charge/discharge curves were different between the case where charging/discharging was started from the charged state and the case where charging/discharging was started from the discharged state. The confirmation results are shown in FIGS. 5A (started from the charged state) and FIG. 5B (started from the discharged state). From FIGS. 5A and 5B, it can be inferred that there is no significant change in the crystal structure of the electrode active material between the changed state and the discharged state because the charge/discharge curve hardly changes regardless of which state the charge/discharge is started from.

### Example 2

In the same manner as in Example 1 except that Li₂S, V₂S₃, and a lithium salt (LiX: LiCl, LiBr, LiI, or Li₂SO₄) were weighed to have a molar ratio of 67.5:22.5:10, four kinds of electrode active materials (90(0.75Li₂S•0.25V₂S₃)•10LiCl, 90(0.75Li₂S•0.25V₂S₃)•10LiBr, 90(0.75Li₂S•0.25V₂S₃)•10LiI, and 90(0.75Li₂S•0.25V₂S₃)•10Li₂SO₄ were obtained. FIG. 6 shows powder XRD patterns of the four kinds of electrode active materials. XRD patterns of Li₂S, V₂S₃, and LiVS₂ are also shown in the lower part of FIG. 6. The numbers in the figure represent the powder diffraction database JCPDS card numbers.

Four kinds of pellets (positive electrodes) with a diameter of 10 mm and a thickness of about 0.05 mm were obtained by pressing 10 mg of the obtained electrode active materials (at a pressure of 360 MPa).

All-solid-state batteries were manufactured in the same manner as in Example 1 except that the above four kinds of positive electrodes were used, and the charge/discharge curves of the batteries were measured up to 5 cycles under the same conditions as in Example 1. The results are shown in FIGS. 7B to 7E. FIG. 7A shows the same data as FIG. 4B, which is shown here again for reference. The charge capacities and discharge capacities at the first to fifth cycles Table 3, as well as the ionic conductivities of powder molds of the respective electrode active materials are shown in.

**[Table 3]**

| Molar ratio | | Capacity (mAh g⁻¹) | | | | | Ionic conductivities (S cm⁻¹) |
|---|---|---|---|---|---|---|---|
| | | First | Second | Third | Fourth | Fifth | |
| 75Li₂S·25V₂S₃ | Charge | 94 | 227 | 220 | 213 | 208 | 3.5 × 10⁻⁵ |
| | Discharge | 230 | 223 | 217 | 211 | 206 | |
| 90(0.75Li₂S · 0.25V₂S₃) ·10LiCl | Charge | 151 | 279 | 271 | 265 | 259 | 6.3 × 10⁻⁴ |
| | Discharge | 290 | 283 | 275 | 269 | 262 | |
| 90(0.75Li₂S · 0.25V₂S₃) • 10LiBr | Charge | 165 | 314 | 307 | 304 | 302 | 6.4 × 10⁻⁴ |
| | Discharge | 318 | 321 | 311 | 307 | 304 | |
| 90(0.75Li₂S . 0.25V₂S₃) ·10LiI | Charge | 294 | 434 | 444 | 448 | 450 | 7.1 × 10⁻⁴ |
| | Discharge | 432 | 442 | 445 | 448 | 450 | |
| 90(0.75Li₂S . 0.25V₂S₃) ·10Li₂SO₄ | Charge | 172 | 338 | 335 | 334 | 332 | 2.6 × 10⁻⁴ |
| | Discharge | 346 | 339 | 337 | 334 | 332 | |

From comparison of FIG. 7A, and FIGS. 7B-7E, and from Table 3, it can be seen that the charge/discharge curves hardly change over cycles, and the batteries are resistant to repeated charging/discharging. From comparison of FIG. 7A and FIGS. 7B to 7E, it can be seen that the charge/discharge capacity can be improved by the electrode active material further containing a lithium salt.

For the all-solid-state battery using 90(0.75Li₂S•0.25V₂S₃)•10LiI, the charge/discharge curve of the battery was measured up to 20 cycles under the same conditions as in Example 1. The results are shown in FIG. 8A. FIG. 8B shows a change over cycles in the charge/discharge capacity of the positive electrode. From FIGS. 8A and 8B, it can be seen that the charge/discharge curve hardly changes even after 20 cycles.

The charge/discharge curve of the above-described all-solid-state battery was measured up to 10 cycles with the charge/discharge capacity limited to 280 mAhg⁻¹ under the same conditions as in Example 1. The results are shown in FIG. 9. It can be seen from FIG. 9 that even if the charge/discharge capacity is limited, the charge/discharge curve does not change significantly. It can also be read from the decrease in the charge potential and the increase in the discharge potential that the performance is improved by repeating charging/discharging.

The charge/discharge curve of the above-described all-solid-state battery was measured under the same conditions as in Example 1 except that the current density was 0.13 mA/cm² for 1^{st} to 5^{th} cycles, 0.64 mA/cm² for 6^{th} to 10^{th} cycles, 1.3 for 11^{th} to 15^{th} cycles, 2.3 for 16^{th} to 20^{th} cycles, and 0.13 for 21^{st} to 25^{th} cycles. The results are shown in FIG. 10A. FIG. 10B shows a change over cycles in the charge/discharge capacity of the positive electrode. It can be seen from FIGS. 10A and 10B that charging/discharging can be performed even at a high current density. Further, since the tendency of the charge/discharge capacity of the electrode is almost the same before and after charging/discharging at a high current density, it can be seen that the electrode active material is resistant to structural changes even under severe charge/discharge conditions.

As another measurement example, in an all-solid-state battery prepared using 90(0.75Li₂S•0.25V₂S₃)•10LiI as the electrode active material and 54LI₃PS₄•46LiI (molar ratio) as the SE, the change over cycles in the charge/discharge capacity of the positive electrode was measured.

54LI₃PS₄•46LiI used as the SE was produced by putting LI₃PS₄ and LiI into a planetary ball mill and subjecting them to a mechanochemical treatment as in the above-described method for SE production. The all-solid-state battery was manufactured in the same manner as in Example 1 except that 90(0.75Li₂S•0.25V₂S₃)•10LiI was used as the electrode active material and 54LI₃PS₄•46LiI was used as the SE.

The charge/discharge curve of the obtained all-solid-state battery was measured under the same conditions as in Example 1 except that the current density was 0.13 mA/cm² for 1^{st} to 5^{th} cycles, 0.64 mA/cm² for 6^{th} to 10^{th} cycles, 1.30 mA/cm² for 11^{th} to 15^{th} cycles, 2.60 mA/cm2 for 16^{th} to 20^{th} cycles, and 0.13 mA/cm² after 20 cycles.

FIG. 10C shows a change over cycles in the measured charge/discharge capacity of the positive electrode. FIG. 10C shows that the charge/discharge capacity exceeding 300 mAhg⁻¹ is maintained even after 200 cycles, and that the fluctuation of the charge/discharge capacity between charge/discharge cycles is small, so that the all-solid-state battery using the electrode active material of the present invention has a stable charge/discharge capacity.

First, pre-charge, post-charge, and post-discharge impedance plots of an all-solid-state battery using 90(0.75Li₂S•0.25V₂S₃)•10LiI at a current density of 0.13 mA/cm² are shown in FIGS. 11A to 11C respectively. It can be seen from FIGS. 11A to 11C that the resistance of the electrode active material is reduced after the first discharging. This is presumably because the gaps (interfaces) formed at the time of manufacturing the electrode is reduced through charging/discharging since the electrode active material is relatively soft.

For the above-described all-solid-state battery, in order to examine the change in the structure of the electrode active material due to charging/discharging, the changes in the 2p orbital of an S atom and the 2p orbital of a V atom in the electrode were observed with the plots obtained by XPS. Observations were made at five points: before charging, after first charging, discharging to around 1.2V (during discharging: discharging to the same level as the charge capacity), after complete discharging, and after second charging. Further, in order to confirm the change in the structure due to the addition of LiI, the changes in the 2p orbital of an S atom and the 2p orbital of a V atom in the electrode before charging in the all-solid-state battery using 75Li₂S•25V₂S₃ were observed with the plots obtained by XPS. The results are shown in FIGS. 12A and 12B. From FIGS. 12A and 12B, the following can be inferred.
(1) Comparison between the profiles of the 2p orbitals of 90(0.75Li₂S•0.25V₂S₃)•10LiI and 75Li₂S•25V₂S₃ before charging shows that the electronic states of S and V are hardly changed by the addition of Lil.
(2) From the profile of the 2p orbital of an S atom, it can be seen that polysulfide is produced by charging. It can also be seen that the amount of polysulfide is larger after the second charging than after the first charging.
(3) In the profile of the 2p orbital of an S atom, no peak corresponding to polysulfide is observed during discharging. A peak suggesting that Li₂S is being generated can be seen.
(4) From the profile of the 2p orbital of an S atom, it can be seen that when the battery is fully discharged, there will be only S(S²⁻) in an oxidized state similar to Li₂S. This indicates that sulfur redox is occurring, which contributes to the increase in capacity.
(5) From the profiles of the 2p orbitals of a V atom before charging, after the first charging, and after the second charging, it can be seen that each peak is slightly shifted to the high energy side by charging. From this shift, it is inferred that V is oxidized by charging.

### Example 3

An all-solid-state battery was manufactured in the same manner as in Example 2 except that the molar ratio of Li₂S and V₂S₃ was changed to 0.70:0.30, and the charge/discharge curve of the battery was measured up to five cycles under the same conditions as in Example 1. The results are shown in FIG. 13. The charge capacities and discharge capacities of the first to fifth cycles are shown in Table 4.

**[Table 4]**

| Molar ratio | | Capacity (mAh g⁻¹) | | | | |
|---|---|---|---|---|---|---|
| | | First | Second | Third | Fourth | Fifth |
| 90(0.70Li₂S·0.30V₂S₃)·10LiI | Charge | 234 | 348 | 345 | 342 | 340 |
| | Discharge | 388 | 367 | 353 | 350 | 348 |

From FIG. 13 and Table 4, it can be seen that the charge/discharge curve hardly changes over cycles, and the battery is resistant to repeated charging/discharging.

### Example 4

An all-solid-state battery was manufactured in the same manner as in Example 2 except that the molar ratio of Li₂S, V₂S₃, LiI, and Li₂SO₄ was changed to 56:24:10:10, and the charge/discharge curve of the battery was measured up to five times under the same conditions as in Example 1. The results are shown in FIGS. 14A and 14B. The charge capacities and discharge capacities of the first to fifth cycles are shown in Table 5.

**[Table 5]**

| Molar ratio | | Capacity (mAh g⁻¹) | | | | |
|---|---|---|---|---|---|---|
| | | First | Second | Third | Fourth | Fifth |
| 90(0.70Li₂S-0.30V₂S₃) ·10Li₂SO₄ | Charge | 107 | 442 | 445 | 446 | 446 |
| | Discharge | 429 | 444 | 446 | 446 | 446 |
| 80(0.70Li₂S·0.30V₂S₃) ·10LiI·10Li₂SO₄ | Charge | 234 | 391 | 394 | 395 | 396 |
| | Discharge | 407 | 405 | 404 | 403 | 402 |

From FIGS. 14A and 14B and Table 5, it can be seen that the charge/discharge curve hardly changes over cycles, and the battery is resistant to repeated charging/discharging.

### Example 5

An electrode active material (Li₃VS₄) and an electrode were obtained in the same manner as in Example 1 except that Li₂S, V₂S₃, and S were weighed to have a molar ratio of 50:17:33.

Further, two kinds of electrode active materials (90Li₃VS₄•10LiI and 90Li₃VS₄•10Li₂SO₄) and a positive electrode were obtained in the same manner as in Example 2 except that Li₂S, V₂S₃, S, and a lithium salt (LiI or Li₂SO₄) were weighed to have a molar ratio of 45:15:30:10.

In addition, an electrode active material (80Li₃VS₄•20Li₂SO₄) and a positive electrode were obtained in the same manner as in Example 2 except that Li₂S, V₂S₃, S, and a lithium salt (Li₂SO₄) were weighed to have a molar ratio of 40:13.6:26.4:20.

FIGS. 15A and 15B show XRD patterns of these four kinds of electrode active materials. XRD patterns of Li₂S, V₂S₃, LiI, and Li₂SO₄ are also shown in the lower parts of FIGS. 15A and 15B.

From FIGS. 15A and 15B, it can be seen that the addition of either of the lithium salts does not significantly change the XRD patterns from that of Li₃VS₄. Further, since the peak corresponding to Li₂S is slightly broadened, it can be seen that amorphization is caused by the addition of ether of the lithium salts.

The charge/discharge curves were measured up to two cycles in the same manner as in Example 1 except that the four kinds of electrode active materials were used. The results are shown in FIGS. 16A to 16D. The charge capacities and discharge capacities of the first and second cycles are shown in Table 6.

**[Table 6]**

| Molar ratio | | Capacity (mAh g⁻¹) | | | | |
|---|---|---|---|---|---|---|
| | | First | Second | Third | Fourth | Fifth |
| Li₃VS₄ | Charge | 80 | 359 | - | - | - |
| | Discharge | 432 | 357 | - | - | - |
| 90Li₃VS₄ · 10LiI | Charge | 223 | 554 | 556 | 557 | 563 |
| | Discharge | 563 | 554 | 554 | 555 | 546 |
| 90Li₃VS₄ · 10Li₂SO₄ | Charge | 93 | 334 | 342 | 314 | 292 |
| | Discharge | 383 | 368 | 343 | 314 | 292 |
| 80Li₃VS₄ · 20Li₂SO₄ | Charge | 101 | 377 | - | - | - |
| | Discharge | 387 | 376 | - | - | - |

From FIGS. 16A to 16D and Table 6, it can be seen that the charge/discharge curves hardly change over cycles because of the addition of either of the lithium salts to Li₃VS₄, and batteries resistant to repeated charging/discharging can be obtained. From FIGS. 16B, 16C, and 16D, it can be seen that LiI can improve the initial charge capacity more than Li₂SO₄.

### Example 6

Electrode active material 75Na₂S•25V₂S₃ was obtained in the same manner as in Example 1 except that Na₂S (Nagano Co., Ltd.) and V₂S₃ were weighed to have a molar ratio of 75.0:25.0. Electrode active material 90(0.75Na₂S•0.25V₂S₃)•10NaI was obtained in the same manner as in Example 1 except that Na₂S, V₂S₃, and NaI (Sigma-Aldrich) were weighed to have a molar ratio of 67.5:22.5:10. FIG. 17 shows powder XRD patterns of these electrode active materials. An XRD pattern of Na₂S is also shown in the lower part of FIG. 17 for comparison.

The ionic conductivity of the obtained electrode active material was measured by manufacturing a cell for ionic conductivity measurement. The cell for ionic conductivity measurement was manufactured as follows.

A pellet was obtained by pressing 40 mg of produced 75Na₂S•25V₂S₃ at a pressure of 100 MPa for 1 minute using a uniaxial hydraulic press. Forty milligrams of Na₃PS₄ glass ceramic solid electrolyte was attached to both sides of the pellet and pressed at a pressure of 370 MPa for 3 minutes. After pressing, 30 mg of a Na-Sn alloy was stacked on Na₃PS₄ glass ceramic solid electrolyte at both ends, sandwiched between stainless steel collectors, and pressed again (at a pressure of 100 MPa) to manufacture a cell for ionic conductivity measurement. The Na₃PS₄ glass ceramic solid electrolyte used was produced by weighing 1g of Na₂S and P₂S₅ to have a molar ratio of 75:25, putting it into a planetary ball mill, and subjecting it to a mechanochemical treatment. A cell using 90(0.75Na₂S•0.25V₂S₃)•10NaIinstead of 75Na₂S•25V₂S₃ was also manufactured.

The ionic conductivity was measured using the two kinds of manufactured cells. As a result of the measurement, the ionic conductivity of the cell using Na₃VS₃ was σ_{Na} = 4.2 × 10⁻⁶ S cm⁻¹, and that of the cell using 90(0.75Na₂S•0.25V₂S₃)•10NaI was σ_{Na} = 5.4 × 10⁻⁶ S cm⁻¹.

The obtained 75Na₂S•25V₂S₃ was mixed with a Na₃PS₄ glass ceramic solid electrolyte to have a weight ratio of 7:3. By pressing 10 mg of this mixture (at a pressure of 360 MPa), a pellet (positive electrode) having a diameter of 10 mm and a thickness of about 0.05 mm was obtained.

An all-solid-state battery was manufactured in the same manner as in Example 1 except that this positive electrode, a Na₃PS₄ glass ceramic solid electrolyte as the solid electrolyte, and a Na-Sn alloy as the negative electrode were used. An all-solid-state battery using 90(0.75Na₂S•0.25V₂S₃)•10NaIinstead of 75Na₂S•25V₂S₃ was also manufactured.

The initial charge/discharge curves of the two kinds of manufactured all-solid-state batteries were measured. The battery measurement conditions were the same as those in Example 1 except that charging/discharging was performed at 60 °C. The results of the measurements are shown in FIGS. 18 and 19, respectively. FIGS. 18 and 19 show that both all-solid-state batteries have a charge/discharge capacity of 200 mAhg⁻¹ or more.

## Claims

1. An electrode active material for an alkali metal battery,
represented by formula:
Aₐ₁MSa₂Xₐ₃
wherein A is selected from Li and Na, M is selected from group 4 to 6 elements (V, Nb, Ta, Ti, Zr, Hf, Cr, Mo, and W), X is selected from F, Cl, Br, I, CO₃, SO₄, NO₃, BH₄, BF₄, PF₆, ClO₄, CF₃SO₃, (CF₃SO₂)₂N, (C₂F₅SO₂)₂N, (FSO₂)₂N, and [B(C₂O₄)₂], a1 is 1 to 9, a2 is 2 to 6, and a3 is 0<a3≤1.

2. The electrode active material for an alkali metal battery according to claim 1, wherein A comprises Li, M comprises V, and X comprises one selected from Cl, Br, I, and SO₄.

3. The electrode active material for an alkali metal battery according to claim 1 or 2, wherein the formula: Aₐ₁MSₐ₂Xₐ₃ is represented by (Li₂S)_{b1}-(V₂S₃)_{b2}-(Li_{c}X)_{b3}, wherein b1/b2 is 1 to 9, b3/b2 is 0.1 to 1.5, and c is 1 to 2.

4. The electrode active material for an alkali metal battery according to claim 1, wherein A comprises Na, M comprises V, and X comprises one selected from Cl, Br, I, and SO₄.

5. The electrode active material for an alkali metal battery according to any one of claims 1 to 4, wherein the alkali metal battery is an all-solid-state battery.

6. The electrode active material for an alkali metal battery according to any one of claims 1 to 5, wherein the alkali metal battery comprises a positive electrode, a negative electrode, and a solid electrolyte layer positioned between the positive electrode and the negative electrode, and the positive electrode contains no solid electrolyte.

7. An electrode for an alkali metal battery comprising the electrode active material according to any one of claims 1 to 6.

8. An alkali metal battery comprising
a positive electrode, a negative electrode, and an electrolyte layer positioned between the positive electrode and the negative electrode,
wherein the positive electrode or the negative electrode or both of the positive and negative electrodes comprise the electrode active material according to any one of claims 1 to 6.

9. The alkali metal battery according to claim 8, wherein the electrolyte layer comprises a solid electrolyte layer.
